# FASCICULE DE BREVET EUROPEEN

(11) **EP 0 911 213 B1**
(45) Date de publication et mention de la délivrance du brevet: **28.01.2004**
(21) Numéro de dépôt: 98402548.6
(22) Date de dépôt: 14.10.1998
(51) Int. Cl.: B60Q 1/04, B60R 13/06

(54) **Dispositif d'éclairage ou de signalisation à moyens d'étanchéité perfectionnés avec la carrosserie d'un véhicule automobile**
Beleuchtung- oder Signalsystem mit verbesserten Dichtungsmitteln zwischen System und Karosserie
Lighting or signalling system with improved sealing means between the system and the car body

(30) Priorité: 14.10.1997 FR 9712817
(43) Date de publication de la demande: 28.04.1999
(73) Titulaire: VALEO VISION, 93000 Bobigny (FR)
(72) Inventeur: Duplessy, Régis, 89100 Paron (FR)
(74) Mandataire: Le Forestier, Eric

(56) Documents cités:
- EP-A- 0 745 510
- DE-A- 3 903 453
- DE-U- 29 606 586
- FR-A- 2 559 868
- FR-A- 2 636 114
- US-A- 5 376 423

## Description

La présente invention concerne de manière générale les dispositifs d'éclairage ou de signalisation pour véhicules automobiles.

Elle concerne plus particulièrement un dispositif du type comprenant un boîtier destiné à être monté dans une ouverture de la carrosserie du véhicule automobile, au moins un organe d'éclairage ou de signalisation monté dans le boîtier, et un joint d'étanchéité profilé assurant une continuité étanche entre ledit boîtier et la carrosserie, ce joint d'étanchéité étant fixé sur le pourtour du boîtier par l'intermédiaire d'une partie de fixation coopérant avec une partie de fixation complémentaire du boîtier. Un tel dispositif est connu.

Généralement, ce joint d'étanchéité profilé, comporte pour sa fixation sur le boîtier, une gorge longitudinale dans laquelle s'engage un muret périphérique qui vient de formation avec le boîtier, ce muret étant situé sur la face du boîtier tournée vers l'intérieur de la carrosserie du véhicule automobile.

De manière classique, un tel joint fourni au kilomètre est tout d'abord coupé à une longueur égale au périmètre du muret, puis encollé au fond de sa gorge de montage avant d'être chaussé sur le muret, les deux extrémités dudit joint étant alors positionnées bout à bout.

L'écrasement du joint sur la carrosserie assure une étanchéité entre celle-ci et le boîtier du dispositif d'éclairage ou de signalisation.

Cependant, dans la plupart des cas, les deux extrémités du joint ainsi fixé sur le boîtier du dispositif d'éclairage ou de signalisation, ne sont pas jointives et l'étanchéité au niveau du plan de jointure des deux extrémités du joint n'est pas satisfaisante du fait de l'existence entre les deux extrémités d'un espace libre.

En effet, après le montage du joint d'étanchéité sous tension sur le boîtier, il se produit un phénomène de retrait du joint qui provoque alors la disjonction de ses extrémités mises bout à bout, et la formation entre elles d'un espace libre.

Pour éviter une telle discontinuité au niveau des extrémités du joint d'étanchéité, qui altère son efficacité, actuellement, on encolle les extrémités du joint, puis on raboute celui-ci avant de le monter sur le boîtier.

Les opérations d'encollage et de raboutage sont des opérations manuelles supplémentaires dans le processus de montage du dispositif d'éclairage ou de signalisation dans l'ouverture de la carrosserie du véhicule. De telles opérations doivent être précises et sont donc relativement longues.

Au surplus, l'opération d'encollage nécessite bien entendu l'utilisation de colle qui peut former au niveau du plan de jonction des deux extrémités du joint un point dur néfaste à la compression du joint, qui assure l'étanchéité entre la carrosserie et le boîtier. La colle peut dégager des odeurs et être toxique. De telles colles sont donc à manipuler avec précaution, ce qui ralenti alors de telles opérations d'encollage et de raboutage.

Ces opérations supplémentaires allongent le processus de montage du dispositif et globalement augmentent le coût de fabrication du véhicule automobile.

Par rapport aux inconvénients précités de l'état de la technique, la présente invention propose donc un nouveau dispositif d'éclairage ou de signalisation dont la mise en place dans l'ouverture de la carrosserie du véhicule est simplifiée, tout en assurant une bonne étanchéité entre son boîtier et la carrosserie.

On connaît par ailleurs par le document DE 296 06 586 U1 un joint d'étanchéité dans lequel des pions cylindriques prévus sur une partie de montage pénètrent dans des cavités correspondantes du joint au niveau de ses extrémités, pour assurer la retenue du joint.

Par rapport à cet enseignement, un autre objet de la présente invention est d'améliorer la retenue du joint et l'efficacité de l'étanchéité, grâce à une meilleure répartition des efforts qui retiennent le joint, et vise également à faciliter le montage et à permettre à l'opérateur de vérifier visuellement que le montage est correct.

Ainsi la présente invention propose un dispositif d'éclairage ou de signalisation pour véhicule automobile tel que défini dans la revendication 1.

Ainsi, lors du montage du joint d'étanchéité sur le boîtier du dispositif d'éclairage ou de signalisation selon l'invention, les extrémités du joint d'étanchéité sont mises bout à bout, et les encoches pratiquées dans sa partie de fixation coopèrent avec les nervures prévues à cet effet au niveau de la partie de fixation complémentaire du boîtier, afin de maintenir lesdites extrémités en contact. La continuité du joint d'étanchéité est alors assurée au niveau du plan de jointure de ses extrémités, et il garde toute son efficacité d'étanchéité. Lors du retrait du joint après son montage sur le boîtier du dispositif selon l'invention, lesdites nervures prévues sur le boîtier forment des butées contre lesquelles viennent s'appuyer les encoches pratiquées dans la partie de fixation du joint, ce qui permet d'éviter tout déplacement axial du joint et donc permet de maintenir bout à bout lesdites extrémités de ce demier.

Grâce aux agencements prévus selon l'invention, les opérations supplémentaires d'encollage et de raboutage du joint d'étanchéité avant sa mise en place sur le boîtier du dispositif sont supprimées, et le coût de fabrication du véhicule automobile s'en trouve diminué.

Selon une caractéristique avantageuse du dispositif d'éclairage ou de signalisation conforme à la présente invention, la distance prise suivant la direction longitudinale du joint d'étanchéité entre deux nervures situées de part et d'autre du plan de jointure des deux extrémités du joint d'étanchéité, est inférieure à la somme des distances séparant les deux encoches transversales destinées à recevoir lesdites nervures, des extrémités respectives du joint d'étanchéité, de sorte que lorsque lesdites nervures du boîtier sont engagées dans lesdites encoches, les faces des deux extrémités du joint d'étanchéité sont légèrement compressées l'une contre l'autre.

Préférentiellement les nervures viennent de formation par moulage avec ledit boîtier.

Il peut être prévu selon l'invention, que les faces des deux extrémités du joint d'étanchéité comportent une induction de colle.

Selon un mode de réalisation du dispositif d'éclairage ou de signalisation conforme à l'invention, la partie de fixation du joint d'étanchéité comprend une gorge longitudinale définie entre deux pattes longitudinales dudit joint et la partie de fixation complémentaire du boîtier est constituée par un muret annulaire engagé dans ladite gorge longitudinale, et à proximité de chaque extrémité du joint d'étanchéité, il est prévu dans ses deux pattes longitudinales respectivement deux encoches transversales positionnées en vis-à-vis recevant deux nervures positionnées de manière symétrique sur les deux faces latérales dudit muret, et s'étendant sensiblement transversalement à celui-ci.

Par ailleurs, il peut être prévu, selon l'invention, que les encoches transversales situées de part et d'autre du plan de jointure des faces d'extrémité du joint d'étanchéité, soient placées de manière asymétrique par rapport audit plan de jointure.

Selon un autre mode de réalisation, il peut être prévu que les encoches transversales situées de part et d'autre de plan de jointure des faces d'extrémités du joint d'étanchéité soient positionnées de manière symétrique par rapport audit plan de jointure.

Dans le dispositif d'éclairage ou de signalisation selon l'invention, les faces d'extrémité du joint d'étanchéité peuvent être inclinées par rapport à l'axe longitudinal dudit joint ou encore s'étendre sensiblement perpendiculairement à l'axe longitudinal de celui-ci.

La description qui va suivre en regard des dessins annexés donnés à titre d'exemples non limitatifs fera bien comprendre en quoi consiste l'invention et comment elle peut être réalisée.

Sur les dessins annexés :
- la figure 1 est une vue en perspective partielle du boîtier du dispositif d'éclairage ou de signalisation selon l'invention, au niveau du raccordement des extrémités du joint d'étanchéité mis en place sur ledit boîtier ;
- la figure 2 est une vue en coupe selon le plan A-A de la figure 1 ;
- la figure 3 est une vue en perspective d'une extrémité du joint d'étanchéité du dispositif d'éclairage ou de signalisation selon l'invention, et
- la figure 4 est une vue partielle de dessus du joint d'étanchéité du dispositif d'éclairage ou de signalisation selon l'invention, au niveau de la jonction de ses deux extrémités, ledit joint d'étanchéité étant mis en place sur le boîtier dudit dispositif.

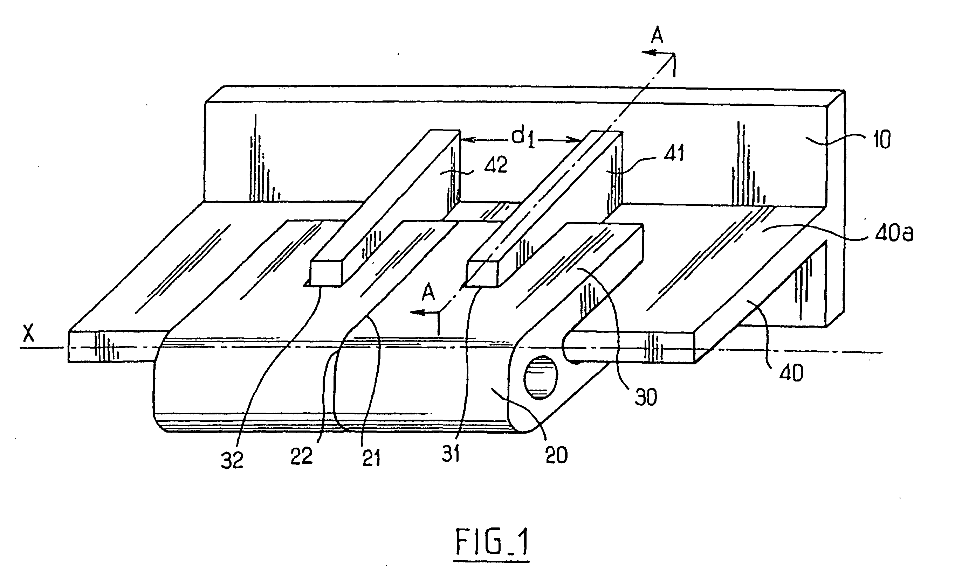

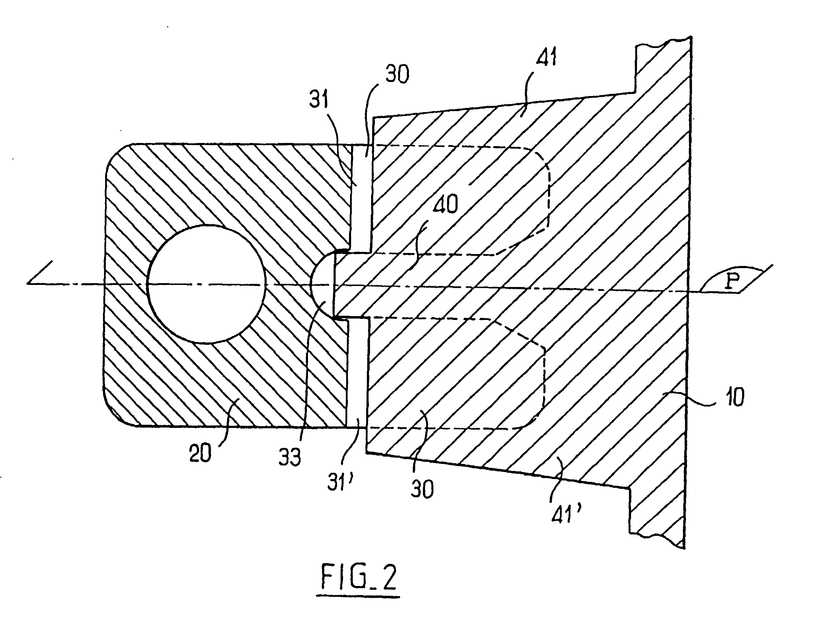

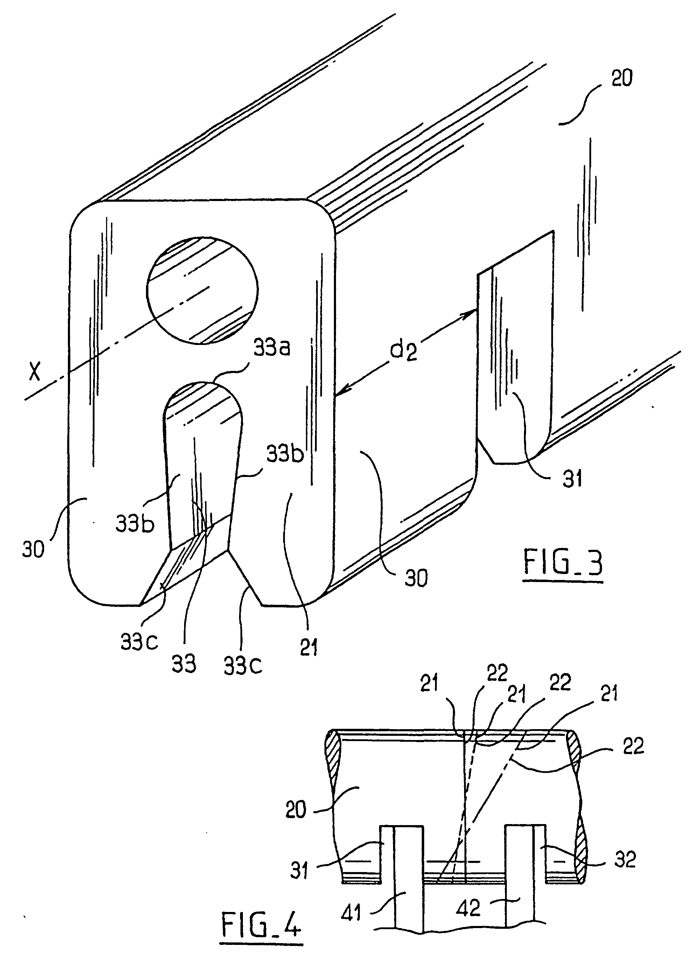

Sur les figures 1 et 2, on a représenté une partie d'un boîtier 10 d'un dispositif d'éclairage ou de signalisation pour véhicules automobiles. Ce boîtier 10 est destiné à être monté dans une ouverture de la carrosserie du véhicule automobile et contient au moins un organe d'éclairage ou de signalisation.

Selon le mode de réalisation représenté sur les figures, le boîtier 10 comprend sur sa face interne tournée vers l'intérieur de la carrosserie du véhicule, un muret périphérique 40 destiné à la fixation d'un joint d'étanchéité 20 profilé, apte à assurer une continuité étanche entre le boîtier et la carrosserie.

Plus particulièrement, comme cela est représenté sur la figure 3, ce joint d'étanchéité profilé 20 réalisé en matière plastique - élastomère, comprend ici pour sa fixation sur le boîtier 10, une gorge longitudinale 33 définie entre deux pattes de fixation longitudinales 30. La gorge longitudinale 33 comporte un fond arrondi 33a qui se prolonge par deux parois latérales 33b convergentes vers l'intérieur, puis par deux parois latérales 33c divergentes vers l'extérieur pour former une entrée évasée.

A la jonction des parois latérales 33c et 33b de la gorge longitudinale 33 celle-ci présente une restriction de section, avec des arêtes qui prennent appui sur le muret 40 lorsque le joint d'étanchéité est positionné sur ledit muret, ce qui participe au maintien dudit joint sur ce dernier (voir figure 2).

Le fond de la gorge longitudinale 33a est encollé pour solidariser le joint d'étanchéité sur le muret.

Comme le montrent les figures 1 et 2, selon le mode de réalisation représenté, à proximité de chaque extrémité 21, 22 du joint d'étanchéité 20, deux encoches transversales 31, 32 (dont une seule est représentée par extrémité sur la figure 1) sont pratiquées respectivement dans les deux pattes de fixation 30 du joint d'étanchéité 20. A chaque extrémité 21 du joint 20, les encoches transversales 31, 31' placées en vis-à-vis, reçoivent des nervures 41, 41' de forme complémentaire, prévues sur le boîtier 10 du dispositif d'éclairage (voir figure 2). Plus particulièrement, il est prévu ici sur les deux faces latérales 40a du muret 40 du boîtier 10, deux paires de nervures 41, 41' s'étendant transversalement audit muret. Chaque paire de nervures 41, 41' placées des deux côtés du muret symétriquement par rapport au plan médian P dudit muret, coopère par engagement avec chaque paire d'encoches en vis-à-vis prévues dans les pattes longitudinales 30 à proximité d'une extrémité du joint d'étanchéité.

Avantageusement, la distance d₁ séparant, suivant la direction longitudinale X du joint d'étanchéité, les deux nervures 41, 42 situées du même côté du muret 40, est inférieure à la somme des distances d₂ (voir figure 3) prises selon la direction longitudinale X du joint d'étanchéité, séparant lesdites encoches 31, 32 destinées à recevoir lesdites nervures 41, 42 de leur extrémité de joint respective. Ainsi, comme le montre la figure 1, lorsque le joint d'étanchéité est monté sur le muret, les encoches 31, 32 coopèrent avec les nervures 41, 42 respectives du boîtier, et les faces d'extrémité 21, 22 dudit joint, sont légèrement compressées l'une contre l'autre.

Selon le mode de réalisation représenté sur la figure 1, les encoches prévues de part et d'autre du plan de jointure des extrémités du joint d'étanchéité, sont positionnées de manière symétrique. Les encoches sont formées par découpage du joint après que celui-ci ait été coupé à la longueur voulue. Les nervures prévues sur les faces latérales du muret du boîtier sont formées par moulage avec le boîtier.

Ce système d'encoches et nervures associées contribue à maintenir les deux extrémités du joint d'étanchéité en contact, pour assurer la continuité du joint à ce niveau.

Lors d'un retrait éventuel du joint après son montage sous tension sur le muret du boîtier du dispositif, comme le montre la figure 4, les nervures 41, 42 prévues sur le boîtier forment des butées axiales contre lesquelles s'appuient les faces internes des encoches, en évitant tout déplacement axial du joint d'étanchéité. Ainsi, la jonction entre les deux extrémités 21, 22 du joint reste parfaite.

Comme le montre également la figure 4, il peut être prévu selon des modes de réalisation différents du dispositif, que les faces d'extrémité (représentées en traits pointillés sur la figure 4) du joint d'étanchéité soient plus ou moins inclinées par rapport à l'axe longitudinal X dudit joint.

Sur la figure 4, trois plans différents des faces d'extrémités du joint d'étanchéité sont représentés (deux plans inclinés et un plan normal à l'axe X du joint). Dans tous les cas, la jonction des deux faces d'extrémité du joint est maintenue grâce au système des encoches du joint coopérant avec les nervures du boîtier.

Pour renforcer la jonction des deux extrémités du joint, il peut être prévu selon l'invention d'encoller les faces d'extrémité dudit joint avant de positionner le joint sur le boîtier.

L'invention n'est nullement limitée aux modes de réalisation décrits et représentés, mais l'homme du métier saura y apporter toute variante conforme à son esprit.

On pourra envisager par exemple conformément à l'invention, que la partie de fixation du joint d'étanchéité sur le boîtier comprenne une lèvre s'étendant dans une rainure formée sur la face interne du boîtier.

Dans ce cas, conformément à l'invention, il sera prévu à proximité de chaque extrémité du joint, une encoche dans la lèvre de fixation du joint, destinée à coopérer avec une nervure positionnée dans la rainure de fixation associée du boîtier.

## Revendications

1. Dispositif d'éclairage ou de signalisation pour véhicule automobile, comprenant un boîtier (10) destiné à être monté dans une ouverture de la carrosserie du véhicule automobile, au moins un organe d'éclairage ou de signalisation monté dans le boîtier, et un joint d'étanchéité (20) profilé assurant une continuité étanché entre ledit boîtier et la carrosserie, ledit joint d'étanchéité (20) étant fixé sur le pourtour du boîtier (10) par l'intermédiaire d'une partie de fixation (30) coopérant avec une partie de fixation complémentaire (40) du boîtier (10), **caractérisé en ce que** le dit joint d'étanchéité (20) comporte dans sa partie de fixation (30), à proximité de chacune de ses deux extrémités (21, 22), au moins une encoche (31, 32) transversale formée par découpage du joint et recevant une nervure correspondante (41, 42) prévue au niveau de la partie de fixation complémentaire (40) du boîtier (10) de telle sorte que chaque nervure est visible de l'extérieur, lesdites encoches et lesdites nervures correspondantes assurant la continuité dudit joint d'étanchéité (20) au niveau de ses extrémités (21, 22).

2. Dispositif selon la revendication 1, **caractérisé en ce que** la distance (d1) prise suivant la direction longitudinale (X) du joint d'étanchéité (20) entre deux nervures (41, 42) situées de part et d'autre du plan de jointure des deux extrémités (21, 22) du joint d'étanchéité (20), est inférieure à la somme des distances (d2) séparant les deux encoches transversales (31, 32) destinées à recevoir lesdites nervures (41, 42), des extrémités (21, 22) respectives du joint d'étanchéité (20) ; de sorte que lorsque lesdites nervures (41, 42) du boîtier (10) sont engagées dans lesdites encoches (31, 32), les faces des deux extrémités (21, 22) du joint d'étanchéité (20) sont légèrement compressées l'une contre l'autre.

3. dispositif selon l'une des revendications 1 ou 2, **caractérisé en ce que** les nervures (41, 42) viennent de formation par moulage avec ledit boîtier (10).

4. Dispositif selon l'une des revendications 1 à 3, **caractérisé en ce que** les faces des deux extrémités (21, 22) du joint d'étanchéité (20) comportent une enduction de colle.

5. Dispositif selon l'une des revendications 1 à 4, **caractérisé en ce que** la partie de fixation du joint d'étanchéité comprend une gorge longitudinale (33) définie entre deux pattes longitudinales (30) dudit joint (20), la partie de fixation complémentaire du boîtier (10) est constituée par un muret annulaire (40) engagé dans ladite gorge longitudinale (33), et à proximité de chaque extrémité (21, 22) du joint d'étanchéité (20), il est prévu dans ses deux pattes longitudinales (30) respectivement deux encoches transversales (31 ; 32) positionnées en vis-à-vis recevant deux nervures (41, 41' ; 42) positionnées de manière symétrique sur les deux faces latérales (40a) dudit muret (40) et s'étendant sensiblement transversalement à celui-ci.

6. Dispositif selon l'une des revendications 1 à 5, **caractérisé en ce que** les encoches transversales situées de part et d'autre du plan de jointure des faces d'extrémité du joint d'étanchéité sont placées de manière asymétrique par rapport audit plan de jointure.

7. Dispositif selon l'une des revendications 1 à 5, **caractérisé en ce que** les encoches transversales situées de part et d'autre du plan de jointure des faces d'extrémités du joint d'étanchéité, sont positionnées de manière symétrique par rapport audit plan de jointure.

8. Dispositif selon l'une des revendications 1 à 7, **caractérisé en ce que** les faces d'extrémités du joint d'étanchéité sont inclinées par rapport à l'axe longitudinal dudit joint.

9. Dispositif selon l'une des revendications 1 à 7, **caractérisé en ce que** les faces d'extrémité du joint d'étanchéité s'étendent sensiblement perpendiculairement à l'axe longitudinal dudit joint.

## Patentansprüche

1. Beleuchtungs- oder Signalgebungsvorrichtung für Kraftfahrzeuge mit einem Gehäuse (10), das zur Anbringung in einer Öffnung der Fahrzeugkarosserie bestimmt ist, wenigstens einem in dem Gehäuse angebrachten Beleuchtungs- oder Signalgebungsorgan und einer Profildichtung (20), die eine durchgehende Abdichtung zwischen dem Gehäuse und der Karosserie gewährleistet, wobei die Dichtung (20) am Umfangsrand des Gehäuses (10) mittels eines Befestigungsteils (30) befestigt ist, das mit einem komplementären Befestigungsteil (40) des Gehäuses (10) zusammenwirkt,
**dadurch gekennzeichnet, dass** die Dichtung (20) in der Nähe jedes ihrer beiden Enden (21, 22) in ihrem Befestigungsteil (30) wenigstens eine quer verlaufende Aussparung (31, 32) aufweist, die durch Einschneiden der Dichtung gebildet ist und eine entsprechende Rippe (41, 42) aufnimmt, die an dem komplementären Befestigungsteil (40) des Gehäuses (10) derart vorgesehen ist, dass jede Rippe von außen sichtbar ist, wobei die Aussparungen und die entsprechenden Rippen den kontinuierlichen Verlauf der Dichtung (20) an den Enden (21, 22) gewährleisten.

2. Vorrichtung nach Anspruch 1,
**dadurch gekennzeichnet, dass** der zwischen zwei zu beiden Seiten der Verbindungsebene der zwei Enden (21, 22) der Dichtung (20) angeordneten Rippen (41, 42) in Längsrichtung (X) der Dichtung (20) gemessene Abstand (d1) kleiner ist als die Summe der die zwei zum Aufnehmen der Rippen (41, 42) bestimmten, quer verlaufenden Aussparungen (31, 32) von den jeweiligen Enden (21, 22) der Dichtung (20) trennenden Abstände (d2), so dass die Stirnflächen der zwei Enden (21, 22) der Dichtung (20) leicht gegeneinander gedrückt werden, wenn die Rippen (41, 42) des Gehäuses (10) in die Aussparungen (31, 32) eingreifen.

3. Vorrichtung nach einem der Ansprüche 1 oder 2,
**dadurch gekennzeichnet, dass** die Rippen (41, 42) zusammen mit dem Gehäuse (10) durch Gießen geformt sind.

4. Vorrichtung nach einem der Ansprüche 1 bis 3,
**dadurch gekennzeichnet, dass** die Stirnflächen der zwei Enden (21, 22) der Dichtung (20) eine Klebeschicht aufweisen.

5. Vorrichtung nach einem der Ansprüche 1 bis 4,
**dadurch gekennzeichnet, dass** das Befestigungsteil der Dichtung eine Längsnut (33) aufweist, die zwischen zwei Längsschenkeln (30) der Dichtung (20) gebildet ist, das komplementäre Befestigungsteil des Gehäuses (10) von einer ringförmigen Wand (40) gebildet ist, die in die Längsnut (33) eingreift, und dass in den beiden Längsschenkeln (30) in der Nähe jedes Endes (21, 22) der Dichtung (20) jeweils zwei quer verlaufende Aussparungen (31, 32) vorgesehen sind, die einander gegenüberliegend angeordnet sind und zwei Rippen (41, 41'; 42) aufnehmen, die zu beiden Seiten (40a) der Wand (40) symmetrisch angeordnet sind und im Wesentlichen quer zu dieser verlaufen.

6. Vorrichtung nach einem der Ansprüche 1 bis 5,
**dadurch gekennzeichnet, dass** die zu beiden Seiten der Verbindungsebene der Endflächen der Dichtung angeordneten, quer verlaufenden Aussparungen bezüglich der Verbindungsebene asymmetrisch angeordnet sind.

7. Vorrichtung nach einem der Ansprüche 1 bis 5,
**dadurch gekennzeichnet, dass** die zu beiden Seiten der Verbindungsebene der Endflächen der Dichtung angeordneten, quer verlaufenden Aussparungen bezüglich der Verbindungsebene symmetrisch angeordnet sind.

8. Vorrichtung nach einem der Ansprüche 1 bis 7,
**dadurch gekennzeichnet, dass** die Endflächen der Dichtung bezüglich der Längsachse der Dichtung geneigt sind.

9. Vorrichtung nach einem der Ansprüche 1 bis 7,
**dadurch gekennzeichnet, dass** die Endflächen der Dichtung im Wesentlichen rechtwinklig zur Längsachse der Dichtung verlaufen.

## Claims

1. Lighting or signalling device for a motor vehicle, comprising a housing (10) intended to be mounted in an opening in the motor vehicle bodywork, at least one lighting or signalling member mounted in the housing, and a profiled seal (20) providing sealed continuity between the said housing and the bodywork, the said seal (20) being fixed to the periphery of the housing (10) by means of a fixing part (30) cooperating with a complementary fixing part (40) on the housing (10), **characterised in that** the said seal (20) comprises , in its fixing part (30), close to each of its two ends (21, 22), at least one transverse recess (31, 32) formed by cutting the seal and receiving a corresponding rib (41, 42) provided at the complementary fixing part (40) of the housing (10) so that each rib is visible from the outside, the said recesses and the said corresponding ribs providing continuity of the said seal (20) at its ends (21, 22).

2. Device according to Claim 1, **characterised in that** the distance (d1) taken in the longitudinal direction (X) of the seal (20) between two ribs (41, 42) situated on each part of the joint face of the two ends (21, 22) of the seal (20) is less than the sum of the distances (d2) separating the two transverse recesses (31, 32) intended to receive the said ribs (41, 42) from the respective ends (21, 22) of the seal (20); so that, when the said ribs (41, 42) of the housing (10) are engaged in the said recesses (31, 32), the faces of the two ends (21, 22) of the seal (20) are slightly compressed against each other.

3. Device according to one of Claims 1 or 2, **characterised in that** the ribs (41, 42) are formed by moulding with the said housing (10).

4. Device according to one of Claims 1 to 3, **characterised in that** the faces of the two ends (21, 22) of the seal (20) comprise a coating of adhesive.

5. Device according to one of Claims 1 to 4, **characterised in that** the fixing part of the seal comprises a longitudinal groove (33) defined between two longitudinal lugs (30) of the said joint (20), the complementary fixing part of the housing (20) consists of a low annular wall (40) engaged in the said longitudinal groove (33), and close to each end (21, 22) of the seal (20) there are provided, in its two longitudinal lugs (30), respectively two transverse recesses (31; 32) positioned facing each other and receiving two ribs (41, 41'; 42) positioned symmetrically on the two lateral faces (40a) of the said low wall (40) and extending substantially transversely thereto.

6. Device according to one of Claims 1 to 5, **characterised in that** the transverse recesses situated on each side of the joint plane of the end faces of the seal are placed asymmetrically with respect to the said joint plane.

7. Device according to one of Claims 1 to 5, **characterised in that** the transverse recesses situated on each side of the joint plane of the end faces of the seal are positioned symmetrically with respect to the said joint plane.

8. Device according to one of Claims 1 to 7, **characterised in that** the end faces of the seal are inclined with respect to the longitudinal axis of the said seal.

9. Device according to one of Claims 1 to 7, **characterised in that** the end faces of the seal extend substantially perpendicular to the longitudinal axis of the said seal.
